## Europäisches Patentamt

## European Patent Office

## Office européen des brevets

(11) Numéro de publication : **0 449 005 B1**

(12)

# FASCICULE DE BREVET EUROPEEN

(45) Date de publication du fascicule du brevet :
**19.01.94 Bulletin 94/03**

(51) Int. Cl.$^5$ : **F26B 17/28, A23L 3/48**

(21) Numéro de dépôt : **91103467.6**

(22) Date de dépôt : **07.03.91**

(54) **Procédé de déshydratation de produits alimentaires tels que des soupes, purées, bouillies ou compotes.**

(30) Priorité : **15.03.90 CH 857/90**

(43) Date de publication de la demande :
**02.10.91 Bulletin 91/40**

(45) Mention de la délivrance du brevet :
**19.01.94 Bulletin 94/03**

(84) Etats contractants désignés :
**AT BE CH DE DK ES FR GB GR IT LI LU NL SE**

(56) Documents cités :
**DE-A- 1 492 801**
**DE-A- 1 813 953**
**DE-C- 223 428**

(56) Documents cités :
**DE-C- 457 610**
**FR-A- 547 305**
**GB-A- 202 793**
**US-A- 2 197 804**

(73) Titulaire : **SOCIETE DES PRODUITS NESTLE S.A.**
**Case postale 353**
**CH-1800 Vevey (CH)**

(72) Inventeur : **Badertscher, Ernest**
**Ch. de Champ Bornu 7**
**CH-1350 Orbe (CH)**
Inventeur : **Duc, Heribert**
**Penchèvre 19**
**CH-1350 Orbe (CH)**

Jouve, 18, rue Saint-Denis, 75001 PARIS

EP 0 449 005 B1

## Description

La présente invention est relative à un procédé de déshydratation de produits alimentaires tels que des soupes, purées, bouillies, boissons ou compotes.

La présente invention a plus particulièrement pour objet un procédé de déshydratation de produits alimentaires dans lequel un mélange humide à déshydrater est appliqué contre une surface de séchage constituée d'un cylindre chauffé mobile en rotation autour de son axe horizontal. Un tel procédé de séchage de matière humide est décrit, par exemple, dans le document FR-A-547 305.

Il est connu des installations de déshydratation de ce type dans lesquelles deux cylindres sécheurs chauffés, parallèles, de mêmes diamètres et situés dans un même plan horizontal sont en contact l'un contre l'autre selon une génératrice commune, ou sont faiblement écartés l'un de l'autre. Dans ces installations les deux cylindres sont mobiles en rotation autour de leurs axes respectifs et dans des sens inverses. Ainsi, le mélange humide contenu dans le bourbier situé à la partie supérieure des cylindres sécheurs se dépose sous forme d'un film à la surface de ces derniers.

Les sécheurs de ce type sont très répandus dans l'industrie agro-alimentaire. Ils sont particulièrement utilisés dans le cas où les réactions dites de Maillard sont désirées.

En effet, les produits contenant des sucres réducteurs et des protéines sont, quand se développent les réactions de Maillard, sujets aux développements de goûts et d'arômes du type biscuit, en outre ces réactions entraînent la formation de produits antioxydants qui sont utiles pour l'amélioration de la conservation des produits.

Or, les réactions de Maillard sont particulièrement favorisées par des concentrations en matière sèche voisine de 80% à 90% et donc par des temps de séchage élevés, au moins quand ces concentrations critiques en matière sèche sont atteintes.

Les installations décrites ci-avant étant caractérisées, d'une part, par une ventilation médiocre et, d'autre part, par une vitesse de séchage relativement faible, ces installations sont très favorables à l'apparition des réactions de Maillard.

Malheureusement, il est des cas où les réactions de Maillard doivent être évitées, d'une part puisqu'elles entraînent la formation de produits peu diététiques et, d'autre part, parce que l'aspect "biscuit" n'est pas toujours désiré, que cela soit sur le plan du goût ou sur le plan de la couleur et de l'aspect général.

Ainsi, les installations à deux cylindres sécheurs décrites ci-avant, comme il vient d'être démontré qu'elles favorisent les réactions de Maillard, sont à déconseiller dans le cadre du séchage de produits délicats si l'on veut éviter les réactions de Maillard.

Le problème devient particulièrement crucial pour les nouvelles céréales à base de farines hydrolysées très riches en sucres réducteurs.

Or, les installations de déshydratation à deux cylindres sécheurs, telles que celles décrites ci-avant représentent une part importante des installations en place.

La demanderesse s'est donc posé le problème de pouvoir, en utilisant les installations existantes à deux cylindres sécheurs, déshydrater des produits alimentaires sujets aux réactions de Maillard en évitant l'apparition de ces dernières.

Ce problème est résolu par le procédé selon la revendication 1.

D'autres avantages ressortiront à la suite de la description qui va suivre, faite en référence aux dessins annexés donnés seulement à titre d'exemple non limitatif et parmi lesquels :

La Fig. 1 représente une vue schématique du dispositif selon l'invention.

La Fig. 2 représente une variante du dispositif selon l'invention.

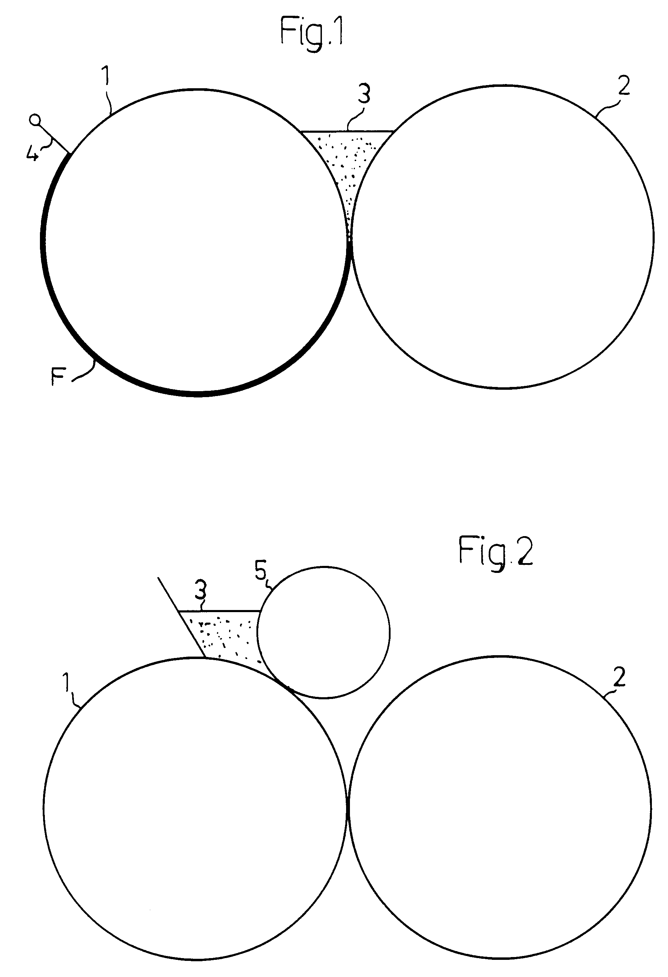

La présente invention est destinée à être mise en oeuvre sur une installation du type décrit à la figure 1.

Dans cette installation deux cylindres 1,2 parallèles, de mêmes diamètres, situés dans un même plan horizontal sont montés mobiles en rotation, autour de leurs axes respectifs, avec des sens de rotation opposés. Les deux cylindres 1,2 peuvent être faiblement écartés l'un de l'autre, ménageant ainsi un interstice de séparation.

Un bourbier 3, alimenté en produit alimentaire à déshydrater par un dispositif non représenté, est situé au dessus des deux cylindres sécheurs 1 et 2 au droit de l'interstice de séparation.

Les diverses matières premières qui vont constituer le produit alimentaire sont mélangées et additionnées d'eau afin de constituer une sorte de soupe qui pourra être facilement pompée et pasteurisée. Diverses compositions peuvent être utilisées, leur caractéristique essentielle commune étant une teneur élevée en céréales hydrolysées riches en sucres réducteurs, et donc une grande sensibilité aux réactions de Maillard.

Le produit alimentaire ainsi constitué alimentant le bourbier 3, un des deux cylindres 1,2 est chauffé à une température permettant la déshydratation du dit produit alors que le second cylindre demeure à une température inférieure à 100°C et ne permet donc pas la déshydratation complète du produit à sa surface externe.

2

Ainsi, les deux cylindres 1,2 tournant autour de leurs axes respectifs en sens inverses, un film F issu de la déshydratation du produit alimentaire alimentant le bourbier 3 va se déposer à la surface externe du cylindre chauffé. Le film se déposant en revanche à la surface externe du second cylindre reste humide, bien que permettant une forte évaporation d'eau, et n'est pas détaché par un couteau.

Le film formé à la surface externe du cylindre chauffé est ensuite détaché.

Grâce à cette caractéristique, le cylindre chauffé fonctionne en fait comme une installation à un seul cylindre sécheur, le deuxième cylindre, non chauffé, étant utilisé comme un satellite.

Les mesures de rendement qui ont pu être réalisées montrent que, pour une installation classique à deux cylindres chauffés, les rendements sont de l'ordre de 8 à 9 kg/m2 pour chaque cylindre alors que, pour une installation à deux cylindres dont un seul est chauffé, le rendement est de 16 à 18 kg/m2 pour le cylindre chauffé.

Le rendement obtenu avec le procédé selon la présente invention est donc voisin de celui obtenu par une installation à deux cylindres classique, le produit alimentaire étant déshydraté deux fois plus vite sur un seul cylindre. Ceci explique pourquoi une installation de ce type fonctionnant selon le procédé de la présente invention évite l'apparition des réactions de Maillard.

Par ailleurs, il a été trouvé que, lors du démarrage du procédé, l'état de surface du cylindre chauffé doit être excellent. Plus particulièrement il est apparu que, si le cylindre chauffé n'est pas chromé, il est avantageux d'enduire ce cylindre de lécithine additionnée d'huile végétale, le cylindre froid n'ayant, en revanche, pas à être enduit.

En revanche, si le cylindre chauffé est chromé, aucun enduit gras ne doit être appliqué contre sa surface car, sinon, le produit à déshydrater ne se dépose pas sous forme de film à sa surface externe.

En outre, les mesures de couleurs faites par la méthode du photovolt ont montré que l'utilisation d'un cylindre chromé favorise la fabrication d'un produit blanc.

De plus, il a été découvert que l'adjonction d'une petite quantité de lécithine au produit à déshydrater favorise le détachement du film de la surface externe du cylindre chauffé lorsque celui-ci est thermoplastique.

Or, il est apparu que les produits alimentaires du type à céréales hydrolysées enzymatiquement dans lesquels la teneur en sucres réducteurs est élevée forment justement un film thermoplastique à la surface externe du cylindre sécheur.

Cependant, un excès de lécithine donne au film une structure qui produit une poudre trop légère après mouture.

Les différents essais qui ont été réalisés montrent que le taux de lécithine doit être compris entre 0,15% et 0,5%.

Par ailleurs, outre la facilité de détachement que procure cette adjonction de lécithine, il a été constaté que le produit obtenu après déshydratation est plus blanc que si on n'utilise pas de lécithine. Enfin, l'analyse précise de la couleur des produits obtenus, par la méthode photovolt, a montré que l'addition d'acide citrique favorise l'obtention d'un produit plus blanc. L'addition de sels n'est par ailleurs préjudiciable que si ces derniers modifient le pH du côté alcalin, le pH devant préférablement être inférieur à 6.

Le tableau ci-dessous montre l'influence du taux de lécithine et d'acide citrique, ainsi que l'influence du matériau constituant la surface externe du cylindre chauffé, sur la couleur du produit final obtenu.

Tous les tests ont été réalisés sur la même purée de céréales à base de farine de riz et de riz hydrolysé enzymatiquement.

Les mesures au photovolt peuvent être interprétées de la façon suivante :

| Produit très blanc | 75 |
| Produit blanc | 69 - 74 |
| Produit légèrement jaune | 64 - 68 |
| Produit trop foncé | inférieur à 63 |

Les résultats sont comparés avec un essai témoin obtenu en faisant fonctionner l'installation à deux cylindres selon la technique classique c'est-à-dire avec deux cylindres chauffés assurant chacun la déshydratation.

Couleur photovolt

| Essai | Lécithine % | Acide citrique % | Cylindre fer | Cylindre chromé |
|---|---|---|---|---|
| Témoin | 0,27 | 0,25 | | 60,6 |
| 1 | 0,17 | 0 | 68,6 | 71,2 |
| 2 | 0,27 | 0 | 65,7 | 72,4 |
| 3 | 0,27 | 0,15 | 70,0 | 74,6 |
| 4 | 0,27 | 0,25 | 73,1 | 73,2 |
| 5 | 0,25 | 0,50 | 71,7 | 74,9 |
| 6 | 0,50 | 0 | 69,1 | 73,3 |

Le dispositif pour la mise en oeuvre du procédé est constitué d'un cylindre sécheur 1, chauffé, mobile en rotation autour de son axe horizontal et d'un second cylindre 2, de même diamètre, parallèle au précédent, un bourbier 3 surmontant les deux cylindres 1 et 2. Un racleur 4 est prévu à la partie supérieure du cylindre sécheur 1, à l'extérieur du bourbier 3, ce racleur 4 s'étendant sur la totalité de la longueur du cylindre sécheur 1 qui lui fait face. Ce racleur 4 est monté mobile en rotation, autour d'un axe parallèle à l'axe du cylindre sécheur 1, grâce à un dispositif de commande non représenté.

Selon une variante de ce dispositif représentée à la figure 2, le cylindre sécheur 1 est équipé d'un ou plusieurs cylindre satellite 5 de plus faible diamètre. Grâce à ce cylindre satellite 5 il est possible d'augmenter la densité finale du produit obtenu de plus de 50%. Le chauffage de ce cylindre satellite 5 permet de modifier la structure du film et d'augmenter le rendement du sécheur.

Le procédé selon la présente invention permet donc de réaliser, sur une installation classique du type à deux cylindres de mêmes diamètres surmontés par un bourbier, la déshydratation des produits sensibles aux réactions de Maillard en évitant l'apparition de ces dernières.

## Revendications

1. Procédé de déshydratation de produits alimentaires à l'aide d'un dispositif comprenant deux cylindres (1,2) de même diamètre, situés dans un même plan horizontal, mobiles en rotation autour de leurs axes respectifs, faiblement écartés l'un de l'autre et surmontés par un bourbier (3) contenant ledit produit alimentaire, dans lequel
ledit produit alimentaire se dépose sous forme d'un film (F) sur le premier cylindre (1) se trouvant à une température permettant la déshydratation dudit produit, le second cylindre (2) demeurant à une température inférieure à 100°C, puis le film déshydraté ainsi obtenu est détaché dudit premier cylindre.

2. Procédé selon la revendication 1 dans lequel le cylindre chauffé (1) est un cylindre non chromé enduit de lécithine.

3. Procédé selon la revendication 1, dans lequel le produit alimentaire est, dans le bourbier, à un pH inférieur à 6.

4. Procédé selon la revendication 1, dans lequel le produit alimentaire est additionné de 0,15% à 0,5% de lécithine.

## Patentansprüche

1. Verfahren zur Dehydratisierung von Nahrungsmitteln mit Hilfe einer Vorrichtung, die aus zwei Walzen (1, 2) mit gleichem Durchmesser besteht, die in einer gemeinsamen horizontalen Ebene liegen, um ihre Ach-

4

sen drehbar sind und in geringem Abstand voneinander angeordnet sind und über denen sich eine Nahrungsmittelansammlung (3) befindet, bei welchem das Nahrungsmittel sich in Form eines Films (F) auf der ersten Walze (1) ablagert, die eine Temperatur hat, die die Dehydratisierung des Produkts bewirkt, wobei die zweite Walze (2) auf einer Temperatur von unter 100° C bleibt, und dann der erhaltene dehydratisierte Film von der ersten Walze abgelöst wird.

2. Verfahren nach Anspruch 1, bei welchem die erhitzte Walze (1) eine nicht verchromte, mit Lecithin beschichtete Walze ist.

3. Verfahren nach Anspruch 1, bei welchem der pH-Wert des Nahrungsmittels in der Nahrungsmittelansammlung unter 6 liegt.

4. Verfahren nach Anspruch 1, bei welchem dem Nahrungsmittel 0,15 bis 0,5 % Lecithin beigegeben wird.

**Claims**

1. A process for dehydrating food products using an apparatus comprising two cylinders (1,2) of the same diameter situated in the same horizontal plane, designed for rotation about their respective axes and spaced slightly apart from one another, being surmounted by a hopper (3) accommodating a food product, in which the food product is applied in the form of a film (F) to the first cylinder (1) at a temperature permitting the dehydration of said product, the second cylinder remaining at a temperature below 100°C, after which the dehydrated film thus obtained is removed from the first cylinder.

2. A process as claimed in claim 1, in which the heated cylinder (1) is a non-chromium-plated cylinder coated with lecithin.

3. A process as claimed in claim 1, in which the food product in the hopper is at a pH value below 6.

4. A process as claimed in claim 1, in which the food product contains 0.15% to 0.5% added lecithin.

Fig.1

Fig.2